# EUROPÄISCHE PATENTSCHRIFT

(11) **EP 2 160 432 B1**
(45) Veröffentlichungstag und Bekanntmachung des Hinweises auf die Patenterteilung: **24.10.2012**
(21) Anmeldenummer: 08760905.3
(22) Anmeldetag: 12.06.2008
(51) Int. Cl.: C08G 69/26, C08G 69/28, C08L 77/06

(54) **VERFAHREN ZUR HERSTELLUNG VON POLYAMIDEN**
METHOD FOR PRODUCING POLYAMIDES
PROCÉDÉ DE FABRICATION DE POLYAMIDES

(30) Priorität: 20.06.2007 EP 07110656
(43) Veröffentlichungstag der Anmeldung: 10.03.2010
(73) Patentinhaber: BASF SE, 67056 Ludwigshafen (DE)
(72) Erfinder: DESBOIS, Philippe, 68535 Edingen-Neckarshausen (DE); STAWITZKI, Hagen, 76137 Karlsruhe (DE); NEUHAUS, Ralf, 69124 Heidelberg (DE); WEIS, Hans-Joachim, 67069 Ludwigshafen (DE); WEICHMANN, Jürgen, 67098 Bad Dürkheim (DE); FERNANDEZ RODILES, Raquel, 68161 Mannheim (DE); VOGEL, Gunter, 67346 Speyer (DE)
(86) Internationale Anmeldenummer: PCT/EP2008/057360
(87) Internationale Veröffentlichungsnummer: WO 2008/155281

(56) Entgegenhaltungen:
- US-A- 4 963 646
- US-A- 5 079 307
- US-A- 5 728 800
- MARTIN E. ROGERS AND TIMOTHY E. LONG: "Synthetic Methods in Step-Growth Polymers - 3. Polyamides" 29. Juli 2003 (2003-07-29), JOHN WILEY & SONS , XP002487964 ISBN: 0-471-38769-X Seite 167, Absatz 2 Seite 168; Abbildung 3.21 Seite 168, Absatz 1

## Beschreibung

Die Erfindung betrifft ein Verfahren zur Herstellung eines Polyamids auf Basis von Dicarbonsäuren und Diaminen. Insbesondere betrifft die Erfindung ein derartiges Verfahren zur Herstellung von teilaromatischen teilkristallinen Polyamiden.

Die Herstellung von insbesondere Polyamiden mit hoher Viskositätszahl erfordert typischerweise die Anwendung hoher Umsetzungstemperaturen. Diese wiederum führen zum erhöhten Ablauf von Nebenreaktionen. Die hohe Viskosität führt zudem zu einer verstärkten Belagsbildung im Reaktor und im schlimmsten Fall zu einer Verstopfung des Reaktors. Ausfallzeiten und eine aufwändige Reaktorreinigung sind die Folgen.

Die EP-A-0 129 105 betrifft ein Verfahren zur kontinuierlichen Herstellung von Polyamiden, bei dem man In einer Verdampferzone eine wässrige Lösung von Salzen aus Dicarbonsäuren und Diaminen unter erhöhtem Druck unter gleichzeitiger Verdampfung von Wasser und Bildung eines Präpolymeren erhitzt. Präpolymere und Dampf werden kontinuierlich getrennt, wobei die Dämpfe rektifiziert und mitgeführte Diamine zurückgeleitet werden. Das Präpolymere wird in eine Polykondensationszone geleitet.

Zur Erhöhung des Molekulargewichts kann gemäß DE-A-1 720 349 Polyamid 6,6 in einem mit Entgasungsöffnungen versehenen selbstreinigenden scharf abkämmenden Schneckenreaktor weiter kondensiert werden.

Gemäß DE-A-195 14 145 ist zudem die Herstellung eines Polymeren auf der Basis einer Dicarbonsäure und eines Diamins durch Polykondensation in einem Reaktor möglich. Dabei wird eine feste Mischung der Monomere zunächst in einem gegenläufigen Doppelschneckenextruder und sodann in einem gleichläufigen Doppelschneckenextruder umgesetzt.

Teilaromatische teilkristalline thermoplastische Polyamide werden üblicherweise in einem Batch-Prozess hergestellt. Ein derartiges Verfahren ist beispielsweise in der EP-A-0 667 367 beschrieben.

US 5,728,800 betrifft thermoplastische Polyamid-Formmassen. Gemäß dem Beispiel in Spalte 12 wird ein Gemisch aus Terephthalsäure, Isophthalsäure, Hexamethylendiamin und Bis(4-aminocyclohexyl)methan in Wasser zunächst in einem röhrenförmigen Verdampfer umgesetzt, der teilweise horizontal und teilweise vertikal angeordnet ist. Es schließt sich ein Separator an, aus dem über eine Austragsschnecke in Form von Extrudaten ausgetragen wird, wobei die Austragsschnecke eine Entgasungszone aufweist.

US 5,079,307 betrifft die Herstellung von Polyamid mit hohem Molekulargewicht aus dicarboxyterminiertem Polyamid-Präpolymer. Das Dicarboxy-terminierte Polyamid-Präpolymer wird in einem Extruder in Gegenwart eines Additivs, das ein Diamin umfasst, weiter umgesetzt. Zur Herstellung des Präpolymers werden ein Batch-Verfahren oder ein kontinuierliches Verfahren angegeben, wobei das kontinuierliche Verfahren ausgehend von einem trockenen Kuchen eines Nylonsalzes in einem corotierenden Doppelschraubenextruder erfolgt.

US 4,963,646 betrifft die Herstellung von amorphen Polyamiden basierend auf aromatischen Dicarbonsäuren und aliphatischen Diaminen. Die Herstellung erfolgt durch zunächst Herstellung von zwei unausgewogenen Präpolymeren, die jeweils einen Diamin- bzw. Dicarbonsäureunterschuss aufweisen. Sodann werden die beiden unausgewogenen Präpolymere homogen vermischt und in einem Entgasungsextruder nachkondensiert. Die Herstellung der Präpolymer erfolgt diskontinuierlich in Autoklaven, wobei die Fließprobleme beim Entleeren von Autoklaven verhindert werden sollen.

Die vorstehenden Verfahren sind teilweise sehr aufwändig, beispielsweise beim Einsatz zweier Extruder, oder erlauben bei der Herstellung teilaromatischer teilkristalliner Polyamide nicht in geeigneter Weise die Steuerung der Viskositätszahl derart, dass eine Temperaturerhöhung und Nebenreaktionen sowie Belagsbildungen verhindert werden könnten.

Typischerweise führt eine Druckerhöhung bei der Polykondensation zu einer Erniedrigung der Viskositätszahl. Für hochviskose Polyamide lässt sich der Druck jedoch häufig nicht so stark steigern, dass die Viskositätszahl des Polyamids wie gewünscht viermindert werden kann.

Aufgabe der vorliegenden Erfindung ist daher die Bereitstellung eines Verfahrens zur Herstellung von Polyamiden auf Basis von Dicarbonsäuren und Diaminen, das die Nachteile der bekannten Verfahren vermeidet und insbesondere die Herstellung von teilaromatischen teilkristallinen Polyamiden mit hoher Viskositätszahl erlaubt, ohne dass es zu nennenswerten Belagsbildungen im Reaktor oder zu Nebenreaktionen kommt.

Die Aufgabe wird erfindungsgemäß gelöst durch ein Verfahren zur Herstellung eines Polyamids auf Basis von Dicarbonsäuren und Diaminen mit folgenden Stufen:
1) Bereitstellen eines wässrigen Monomerengemisches, das aus einem Dicarbonsäurengemisch aus 60 bis 88 Gew.-% Terephthalsäure und 12 bis 40 Gew.-% Isophthalsäure, in dem auch bis zu 20 Gew.% des Dicarbonsäuregemisches durch andere Dicarbonsäuren ersetzt sein können, und Hexamethylendiamin besteht, das bis zu 20 Gew.-% durch andere C₂₋₃₀-Diamine ersetzt sein kann, wobei im Monomerengemisch äquimolare Mengen an Dicarbonsäuren und Diaminen vorliegen,
2) Überführen des wässrigen Gemisches aus Stufe 1) in einen kontinuierlich betriebenen Verdampferreaktor, bei dem es sich um einen senkrecht stehenden, von oben nach unten durchströmten Rohrreaktor handelt, in dem Diamine und Dicarbonsäuren bei einer Temperatur im Bereich von 100 bis 370°C und einem Druck im Bereich von 1 bis 50 bar umgesetzt werden,
3) Überführen des Gemisches aus Stufe 2) in einen Abscheider, der bei einer Temperatur im Bereich von 100 bis 370°C betrieben wird, unter Abtrennung von gasförmigen Komponenten, wobei 0,5 bis 15 Gew.-% des in Stufe 1) eingesetzten Hexamethylendiamins gasförmig abgetrennt werden und am Ausgang von Stufe 3) ein molarer Unterschuss an Diaminen von 1 bis 10 mol-%, bezogen auf die jeweils andere Komponente, vorliegt,
4) Überführen des Gemisches aus Stufe 3) zusammen mit Hexamethylendiamin in einer zum Ausgleich des molaren Unterschusses und zur Erhöhung des Amino-Endgruppengehalts um mindestens 20 mmol/kg geeigneten Menge in einen Extruder, der bei einer Temperatur im Bereich von 150 bis 400°C betrieben wird, für eine Verweilzeit im Bereich von 10 Sekunden bis 30 Minuten, unter Entfernung von gasförmigen Komponenten durch Entgasungsöffnungen, so dass sich der Amino-Endgruppengehalt um mindestens 20 mmollkg erhöht und am Ende des Extruders im erhaltenen Polyamid der Gehalt an Amino-Endgruppen 70 bis 220 mmol/kg beträgt.

Das erfindungsgemäße Verfahren erlaubt die Verminderung der Viskosität des Polyamids vor der Festphasenpolykondensation und erlaubt eine Verminderung der Verweilzeit bei hoher Temperatur, wodurch weniger Nebenreaktionen wie Triaminbildung auftreten und damit die Qualität des Produktes verbessert wird. Es wurde erfindungsgemäß gefunden, dass eine Verfahrensweise, bei der zunächst Diamin Im Unterschuss vorliegt und dieser Unterschuss erst beim Eintrag in einen Extruder zur Nachkondensation ausgeglichen wird, die Herstellung von teilaromatischen teilkristallinen Polyamiden mit hoher Viskositätszahl erlaubt. Das Verfahren weist Vorteile auf, wenn das Monomerengemisch in Stufe 1) aus einem Dicarbonsäurengemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und Hexamethylendiamin besteht, das bis zu 20 Gew.-% durch andere C₂₋₃₀-Diamine ersetzt sein kann.

Das erfindungsgemäße Verfahren weist die Sequenz Verdampferreaktor-Abscheider-Extruder auf, wobei in den Verdampferreaktor ein wässriges Monomerengemisch aus Dicarbonsäuren und Diaminen geführt wird. Dabei wird das molare Verhältnis von Dicarbonsäuren zu Diaminen so eingestellt, dass am Ausgang der nachfolgenden Abscheiderstufe ein molarer Unterschuss an Diaminen von 1 bis 10 mol%, bezogen auf die jeweils andere Komponente, vorliegt.

Beim Einsatz des vorstehend genannten bevorzugten Monomerengemisches wird Hexamethylendiamin nach dem Verdampferreaktor zum Teil gasförmig ausgetragen. Es wird mit äquimolaren Mengen an Hexamethylendiamin und Dicarbonsäuren gestartet, wodurch am Ende des Abscheiders ein Unterschuss an Hexamethylendiamin im (Prä)polymer vorliegt.

Typischerweise wird in Stufe 1) eine wässrige Salzlösung der Ausgangsmonomeren eingesetzt, da Diamine und Dicarbonsäuren Salze bilden.

Das Monomerengemisch besteht aus 50 mol-% Dicarbonsäurengemisch und 50 mol-% Diamin oder Diamingemisch. Das Dicarbonsäuregemisch besteht aus 60 bis 88 Gew.-% Terephthalsäure und 12 bis 40 Gew.% Isophthalsäure. Vorzugsweise liegen 64 bis 80 Gew.-%, insbesondere 64 bis 76 Gew.-% Terephthalsäure vor und entsprechen vorzugsweise 20 bis 36 Gew.-% und insbesondere 24 bis 36 Gew.-% Isphthalsäure. Ferner können auch bis zu 20 Gew.-% des Dicarbonsäuregemisches durch andere Dicarbonsäuren ersetzt sein. Bevorzugt sind dies 0 bis 10 Gew.-%, insbesondere 0 bis 5 Gew.-%. Sofern ein Tell des Dlcarbonsäuregemisches durch andere Dicarbonsäuren ersetzt ist, liegt die Untergrenze der anderen Komponente vorzugsweise bei 0,5 Gew.-%, Insbesondere bei 1 Gew.-%. Andere geeignete Dicarbonsäuren sind beispielsweise Adipinsäure. Pimelinsäure, Korksäure, Acelainsäure und Sebacinsäure sowie 7-Sulfoisophthalsäure.

Als Diaminkomponente wird Hexamethylendiamin eingesetzt, das bis zu 20 Gew.-% durch andere C₂₋₃₀-Diamine ersetzt sein kann. Bevorzugt sind 0 bis 10 Gew.-%, insbesondere 0 bis 5 Gew.-% des Hexamethylendiamins durch andere C₂₋₃₀-Diamine ersetzt. Sofern andere C₂₋₃₀-Diamine vorliegen, beträgt ihre Mindestmenge vorzugsweise 0,5 Gew.-%, insbesondere mindestens 1 Gew.-%. Geeignete weitere Diamine sind beispielsweise Tetramethylendiamin, Octamethylendiamin, Decamethylendiamin und Dodecamethylendiamin sowie m-Xylylendlamln, Bis-(4-aminophenyl)methan, Bis-(4-amlnophenyl)propan-2,2 und Bis-(4-aminocyclohexyl)methan oder Mischungen davon.

Als zusätzliches Diamin wird vorzugsweise Bis(4-aminocyelohexyl)methan eingesetzt, das unter der Bezeichnung Dicycan von der BASF AG erhältlich ist.

Vorzugsweise werden neben Terephthalsäure, Isophthalsäure und Hexamethylendiamin keine anderen Dicarbonsäuren oder Diamine eingesetzt.

In Stufe 2) wird das wässrige Gemisch aus Stufe 1) in einen kontinuierlich betriebenen Verdampferreaktor überführt, in dem Diamine und Dicarbonsäuren bei einer Temperatur im Bereich von 100 bis 370°C, vorzugsweise 200 bis 340°C, und einem Druck Im Bereich von 1 bis 50 bar, vorzugsweise 5 bis 30 bar, umgesetzt werden. Der Verdampferreaktor kann dabei in beliebiger geeigneter Weise ausgebindet sein. Es kann sich beispielsweise um Rohrbündelreaktoren handeln, wie sie in der EP-A-0 129 195 beschrieben sind. Vorzugsweise handelt es sich um einen senkrecht stehenden, von oben nach unten durchströmten Rohrreaktor.

Die Verweilzeit in Stufe 2) beträgt vorzugsweise 0,2 bis 10 Minuten, besonders bevorzugt 1 bis 5 Minuten.

An den Verdampferreaktor schließt sich ein Abscheider an, der bei einer Temperatur von 100 bis 370°C, vorzugsweise 200 bis 340°C betrieben wird. Der Druck im Abscheider beträgt vorzugsweise 1 bis 50 bar, besonders bevorzugt 5 bis 30 bar. Die Verweilzeit in Stufe 3) beträgt vorzugsweise 1 bis 45 Minuten, besonders bevorzugt 2 bis 15 Minuten. Im Abscheider werden gasförmige Komponenten, insbesondere Wasser und flüchtige Monomere, abgetrennt. Beispielsweise werden beim Einsatz des vorstehend beschriebenen bevorzugten Monomerengemisches etwa 0,5 bis 15 % des ursprünglich eingesetzten Diamins Hexamethylendiamin zusammen mit Wasserdampf abgetrennt. Dieses gasförmige Gemisch kann sodann einer Destillation bzw. Rektifikation unterzogen werden, wobei Wasserdampf über Kopf abgezogen wird und ein Diamin/Wasser-Gemisch im Sumpf erhalten wird. Dieses Gemisch kann in die Stufen 1) oder 2) oder in beide Stufen zurückgeführt werden.

An den Abscheider der Stufe 3) schließt sich ein Extruder in Stufe 4) an, in den das Gemisch aus Stufe 3) zusammen mit Hexamethylendiamin in einer zum Ausgleich des molaren Unterschusses geeigneten Menge geführt wird. Der Extruder wird bei einer Temperatur im Bereich von 150 bis 400°C, vorzugsweise 200 bis 370°C betrieben und auf eine Verweilzeit im Bereich von 10 Sekunden bis 30 Minuten, vorzugsweise 2 Sekunden bis 2 Minuten eingestellt. Im Extruder werden ebenfalls gasförmige Komponenten durch Entgasungsöffnungen entfernt.

Geeignete Extruder mit Entgasungsstufen sind dem Fachmann bekannt. Es können dabei erfindungsgemäß bevorzugt Doppelschneckenextruder eingesetzt werden, bei denen es sich um gleichläufige oder gegenläufige Doppelschneckenextruder handeln kann. Für eine Beschreibung der Extruder kann auf EP-A-0 129 195 und DE-A-195 14 145 verwiesen werden.

In Stufe 4 wird Hexamethylendiamin zudosiert. Die zum Ausgleich des molaren Unterschusses geeignete Menge kann durch einfache Versuche ermittelt werden, wobei im nach dem Extruder erhaltenen Polyamid der Carboxylendgruppengehalt und Amino-Endgruppengehalt bestimmt werden kann. Es wird in Stufe 4) vorzugsweise so viel Hexamethylendiamin zudosiert, dass sich der Amino-Endgruppengehaft um mindestens 20 mmol/kg erhöht. Der Amino-Endgruppengehalt am Ende von Stufe 4) beträgt 70 bis 220 mmol/kg.

An die Extrusion können sich zudem eine Festphasen-Nachkondensation und ein Granulierungssehritt anschließen.

Fasern, Füllstoffe, Farbstoffe, Hilfsstoffe oder deren Gemische können direkt im Extruder zur Compoundierung zugeführt werden.

Die nach Stufe 4) erhaltenen Polyamide weisen vorzugsweise eine Viskositätszahl im Bereich von 20 bis 200, besonders bevorzugt von 40 bis 80 auf, insbesondere beim Einsatz des vorstehend beschriebenen Monomerengemisches. Zudem ist es erfindungsgemäß möglich, an unterschiedlichen Stellen des Verfahrens weitere Additive zuzugeben, wie OxazolIne, hyperverzweigte Polymere mit Amino- oder Carboxylgruppen und andere Additive. Die Additive können beispielsweise vor oder nach einer Austragspumpe im Anschluss an den Verdampferreaktor, als Coldfeed oder Hotfeed im Abscheider zugeführt werden.

Bevorzugte, erfindungsgemäß erhältliche Polyamide besitzen eine Glasübergangstemperatur im Bereich von 110 bis 150°C und einen Schmelzpunkt im Bereich von 280 bis 320°C. Sie weisen vorzugsweise eine Kristallinität von mehr als 20% auf und sind daher nicht transparent.

Die Erfindung wird durch die nachstehenden Beispiele näher erläutert.

### Beispiele

Die Anlage zur kontinuierlichen Herstellung von hochtemperaturbeständigen Polyamiden aus Diaminen (Hexamethylendiamin. HMD) und Dicarbonsäuren besteht aus den folgenden Funktionsgruppen:
Ansatzbereitung
Dosierung und Aufheizung
Vorkondensation
Nachkondensation
HMD-Rektifikation
Entgasung und Granulierung

### Verfahrensbeschreibung:

Aus den Diaminen, Dicarbonsäuren, Regler und Wasser wird in der Ansatzbereitung im Rührkessel die Reaktionslösung hergestellt und in den Vorlagenbehälter überführt. Aus der Vorlage wird mittels Zulaufpumpe über den Aufheizer die Reaktionslösung in den Kopf des senkrecht stehenden Verdampferreaktors dosiert. In dem mit Füllkörpern gefüllten und mit Öl beheizten Apparat reagieren unter Druck und Temperatur die Monomere unter Wasserabspaltung (Polykondensation) zum niedermolekularen Vorprodukt. Das austretende Gemisch aus Vorprodukt, dampfförmigem Lösungs- und Reaktionswasser sowie Teil des unumgesetzten HMD wird in den sich anschließenden Abscheider geleitet. Dort trennt sich die Polymerschmelze von den dampfförmigen Anteilen. Die abgeführten Brüdenströme werden zur Rektifizierkolonne geführt und mit kaltem Wasser beregnet. Dadurch werden die verdampften Monomere und die mitgerissenen Polymerteilchen vom Wasserdampf getrennt. Das HMD, das in Form wässriger Lösung im Sumpf anfällt, wird umgepumpt und nach Abtrennung der inzwischen verfestigten Polymerteilchen über Filter zur Reaktionslösung vor dem Verdampferreaktor zurückgepumpt. Die Polymerschmelze aus dem Abscheider wird vor der nachfolgenden Zahnradpumpe mit Amin angereichert. Über die Pumpe wird die Schmelze zum Extruder dosiert, und das restliche Wasser wird ausgegast. In Strängen ausgetragenes Polymer wird mit Wasser gekühlt und granuliert.

### Ansatzbereitung

Sämtliche Komponenten des Ansatzes (ca. 360 kg) werden im Rührkessel bei 95°C gelöst. Nach 60 min Lösezeit wird eine Probe zur pH-Bestimmung entnommen. Der pH-Wert wird durch Zugabe von HMD oder einem Trephthalsäure/Isophthalsäure-Gemisch auf einen pH-Wert von 6,95-7,05 eingestellt, um die Stöchiometrie des Ansatzes einzustellen. Anschließend wird die benötigte Reglermenge zugegeben.

Ist der Ansatz wie beschrieben hergestellt, kann er über eine Pendelleitung zum Vorlagekessel überführt werden.

### Dosierung und Aufheizung

### Vorkondensation

Aus dem Vorlagebehälter wird die Ansatzlösung über eine Feedpumpe, temperiert bei 95°C, zum Verdampferreaktor gepumpt. Gleichzeitig wird er noch von der Rückführpumpe mit oligomerhaltigem Wasser beschickt.

In diesem mit Öl (Lauda Thermostat W 3151) beheiztem Reaktor reagieren die Monomere unter Wasserabspaltung zu niedermolekularem d. h. kurzkettigem Polyamid. Gleichzeitig verdampft nahezu das gesamte Lösungs- und Reaktionswasser.

Der Verdampferreaktor besteht aus 2 Rohren mit einem Durchmesser von 33,6 mm und 1000 mm Länge, sowie aus 2 Rohren mit einem Durchmesser von 53 mm und 1000 mm Länge die alternierend angeordnet sind. Die Füllung besteht aus 6mm-Raschigringen mit Mittelsteg. Daraus ergibt sich ein Schüttvolumen von 6,3 l bei einem Hohlraum von 1,1 l.

Der Rohrreaktor ist mit einem Sicherheitsventil eintrittsseitig abgesichert.

### Nachkondensation

Der nachgeschaltete Abscheider dient zur Phasentrennung der Mischung aus Präpolymer und Wasserdampf, das über ein Einlaufrohr in den Apparat einströmt. Der Abscheider hat eine Baulänge von 1200 mm und einen Innendurchmesser von 102 mm, wobei die letzten 5 cm konisch zulaufen. Das Einlaufrohr ist seitlich exzentrisch angeordnet. Mit Hilfe dieses nach unten geöffneten 8mm-Rohres wird das Phasengemisch in der Hälfte des Abscheiders nahe der Wandung eingetragen.

Um das Präpolymer schmelzflüssig zu halten wird der Abscheider mit Heißöl über einen Doppelmantel temperiert. Die Brüden verlassen den Apparat über die Brüdenleitung im Deckel in Richtung Kolonne der HMD-Rektifikation.

Da dieses System unter Druck (16 bar) steht, bleibt ein geringer Wasseranteil in der Polyamidschmelze gelöst.

Dieser Wasseranteil begrenzt den Molekulargewichtsaufbau und führt zu einer Schmelzpunktdepression.

Die Polyamidschmelze wird über eine Austragspumpe dem Entgasungsextruder zugeführt.

### HMD-Rückführung

Die Brüden werden in eine unbeheizte Rektifizierkolonne eingeleitet. Dort werden sie im Gegenstrom mit Wasser gewaschen. Dabei werden wasserlösliche Oligomere mit dem Waschwasser aus der Kolonne ausgetragen. Die Steuerung des Druckes in der Kolonne erfolgt über ein dampfbeheiztes Regelventil am Kopf der Kolonne. Diese besteht aus einem 1200 mm langen Rohr mit einem Innendurchmesser von 81 mm und einem Kopf- und Bodenteil. Im unteren Teil des Rohres befinden sich 1,87 l 10mm-Pallringe. Auf dieser Schüttung endet ein 180° gebogenes Rohr (Krückstock) als Zulauf des umgewälzten Sumpfes. Der Rest des Rohres ist gefüllt mit 4,85 l 10mm-Raschigringe ohne Steg. Die Füllkörper sind durch 2 Netze zwischen den Flanschen fixiert. Durch die Kopfhaube wird die Kolonne beregnet. Unterhalb der Kolonne befindet sich eine Standmessung über Differenzdruck. In der Kolonne werden die organischen Anteile aus den Brüden mittels Beregnung herausgewaschen. Aus dem Umwälzkreis des Kolonnensumpfes (ca. 150 l/h) wird der niedergeschlagene Anteil in den Produktstrom vor dem Verdampferreaktor zurückgeführt. Die Rückführmenge beträgt etwa 1 l/h. Der Kopfstrom der Kolonne wird abgeführt. Dieser Kopfstrom (ca. 15 kg/h) enthält das gesamte Wasser und einen geringen Anteil HMD (0,3-0,5%). Das HMD muss, da es der Reaktion entzogen wird, als Verlust berücksichtigt werden.

### Entgasung und Granulierung

Eine Austragspumpe (Zahnradpumpe) regelt den konstanten Produktstrom zum Extruder. Beim Extruder handelt es sich um einen ZDSK 30. Die Abdichtung der Schnecke nach hinten erfolgt mittels einer Coldfeed-Dosierung von 0,2 kg Granulat. Auf dem Extruder wird das in der Polymerschmelze enthaltene Wasser über eine Vorwärts- und eine Rückwärtsentgasung entfernt. Die Polymerschmelze wird mit einer Düsenplatte von 3 mm als Strang ausgetragen und im Wasserbad abgekühlt und anschließend mit einer Einzugsgranulierung granuliert. Das erhaltene Granulat wird ungetrocknet gesammelt.

### Parameter:

Zu 170,8 kg Wasser wurden 91,5 kg Hexamethylendiamin-Lösung (69,47%-ig in Wasser, BASF) ^{x} 4 kg Dicycan (BASF) oder Metaxylendiamin (MXD) ^{x} 5 kg Terephthalsäure, ^{x} 6 kg Isophthalsäure (Lonza) in einem Einsatzbehälter bei 90°C vermischt.

22,2 kg/h Salzlösung wurde in dem Anlage 39 bei ^{x} 8 °C Außentemperatur (Verdampfer) und ^{x} 9 °C Außentemperatur (Abscheider) und 17 bar gepumpt. Die Kolonne wurde mit einer 1 kg/h Beregnung und ^{x} 12 kg/h Umwälzung betrieben, ^{x} 13 mol-% HMD/HMD Anfang wurde rezikliert). X 14 Gewicht % / Monomeren Kopplungsmittel wurden zugegeben (Position 1-2-3-4). X 15 HMD Verlust in mol % / HMD Anfang

Die Polymerschmelze wurde bei 310°C extrudiert und granuliert und dann bei ^{x} 17 Stunden bei 200°C getempert.
X 18: VZ vor Temperung, x 19: AEG vor Temperung
X 20: VZ nach 20 Stunden Temperung
X21: AEG nach 20 Stunden Temperung

Die Ergebnisse sind in der nachstehenden Tabelle zusammengefasst.

| | X4 Dicycan/MXD kg | X5 TPS kg | X6 IPS kg | X8 IT Verd. °C | X9 AT Absch. °C | X12 Umwälz kg/h | X13 Rückf. % mol | X14 Kopplungsm. kg/h | X15 HMD Verl. % mol | X17 Kapplungsm. Dos.-Ort | X18 VZ | X19 AEG mmol/kg | X20 VZ 20 std | X21 AEG mmol/kg |
|---|---|---|---|---|---|---|---|---|---|---|---|---|---|---|
| Beispiel 1 | D 4,54 | 61 | 33,49 | 316 | 316 | 146 | 0,38 | kein | 0,68 | - | 63 | 81 | 90 | 33 |
| Beispiel 2 | D 4,54 | 61 | 33,49 | 316 | 316 | 152 | 0,38 | HMD 0,1 | 1,72 | 1 | 63 | - | 107 | - |
| Beispiel 3 | D 4,54 | 61 | 33,49 | 316 | 316 | 149 | 0,38 | HMD 0,2 | 0,47 | 1 | 57 | 191 | 125 | 103 |
| Beispiel 4 | D 4,54 | 61 | 33,49 | 315 | 315 | 142 | 0,38 | HMD 0,1 | 0,68 | 2 | 53 | 170 | 114 | 104 |
| Beispiel 5 | D 4,54 | 61 | 33,49 | 316 | 316 | 149 | 0,38 | D 0,18 | 0,63 | 1 | 56 | 172 | 111 | 83 |
| Beispiel 6 | D 4,54 | 61 | 33,49 | 316 | 316 | 149 | 0,38 | D 0,18 | 0,6 | 1 | 58 | 74 | 102 | 100 |
| Beispiel 7 | D 4,54 | 61 | 33,49 | 315 | 315 | 150 | 0,38 | D 0,18 | 0,76 | 4 | 51 | 214 | 105 | 108 |
| Beispiel 8 | MXD 3,66 | 64,73 | 30,61 | 318 | 318 | 157 | 0,38 | MXD 0,12 | 0,67 | 1 | 65 | 141 | 160 | 65 |
| Beispiel 9 | MXD 3,66 | 64,73 | 30,61 | 318 | 318 | 138 | 0,38 | HMD 0,1 | 0,58 | 1 | 64 | 115 | 127 | 60 |
| Beispiel 10 | MXD 3,66 | 66,66 | 28,7 | 319 | 319 | 0 | 0,38 | MXD 0,12 | 0,72 | 1 | 64 | 143 | 149 | 66 |

## Patentansprüche

1. Verfahren zur Herstellung eines Polyamids auf Basis von Dicarbonsäuren und Diaminen mit folgenden Stufen:
1) Bereitstellen eines wässrigen Monomerengemisches, das aus einem Dicarbonsäurengemisch aus 60 bis 88 Gew.-% Terephthalsäure und 12 bis 40 Gew.-% Isophthalsäure, in dem auch bis zu 20 Gew.-% des Dicarbonsäuregemisches durch andere Dicarbonsäuren ersetzt sein können, und Hexamethylendiamin besteht, das bis zu 20 Gew.-% durch andere C₂₋₃₀-Diamine ersetzt sein kann, wobei im Monomerengemisch äquimolare Mengen an Dicarbonsäuren und Diaminen vorliegen,
2) Überführen des wässrigen Gemisches aus Stufe 1) in einen kontinuierlich betriebenen Verdampferreaktor, bei dem es sich um einen senkrecht stehenden, von oben nach unten durchströmten Rohrreaktor handelt, in dem Diamine und Dicarbonsäuren bei einer Temperatur im Bereich von 100 bis 370°C und einem Druck im Bereich von 1 bis 50 bar umgesetzt werden,
3) Überführen des Gemisches aus Stufe 2) in einen Abscheider, der bei einer Temperatur im Bereich von 100 bis 370°C betrieben wird, unter Abtrennung von gasförmigen Komponenten, wobei 0,5 bis 15 Gew.-% des in Stufe 1) eingesetzten Hexamethylendiamins gasförmig abgetrennt werden und am Ausgang von Stufe 3) ein molarer Unterschuss an Diaminen von 1 bis 10 mol-%, bezogen auf die jeweils andere Komponente, vorliegt,
4) Überführen des Gemisches aus Stufe 3) zusammen mit Hexamethylendiamin in einer zum Ausgleich des molaren Unterschusses und zur Erhöhung des Amino-Endgruppengehalts um mindestens 20 mmol/kg geeigneten Menge in einen Extruder, der bei einer Temperatur im Bereich von 150 bis 400°C betrieben wird, für eine Verweilzeit im Bereich von 10 Sekunden bis 30 Minuten, unter Entfernung von gasförmigen Komponenten durch Entgasungsöffnungen, so dass sich der Amino-Endgruppengehalt um mindestens 20 mmol/kg erhöht und am Ende des Extruders im erhaltenen Polyamid der Gehalt an Amino-Endgruppen 70 bis 220 mmol/kg beträgt.

2. Verfahren nach Anspruch 1 **dadurch gekennzeichnet, dass** sich an die Extrusion eine Festphasen-Nachkondensation und ein Granullerungsschritt anschließen.

3. Verfahren nach einem der Ansprüche 1 oder 2, **dadurch gekennzeichnet, dass** Fasern, Füllstoffe, Farbstoffe, Hilfsstoffe oder deren Gemische direkt im Extruder zur Compoundierung zugeführt werden.

## Claims

1. A process for preparing a polyamide based on dicarboxylic acids and diamines, comprising the following stages:
1) providing an aqueous monomer mixture consisting of a dicarboxylic acid mixture of from 60 to 88% by weight of terephthalic acid and from 12 to 40% by weight of isophthalic acid, in which up to 20% by weight of the dicarboxylic acid mixture may also be replaced by other dicarboxylic acids, and hexamethylenediamine which may be up to 20% by weight replaced by other C₂₋₃₀-diamines, equimolar amounts of dicarboxylic acids and diamines being present in the monomer mixture,
2) transferring the aqueous mixture from stage 1) to a continuous evaporator reactor which is a vertical tubular reactor flowed through from the top downward, in which diamines and dicarboxylic acids are reacted at a temperature in the range from 100 to 370°C and a pressure in the range from 1 to 50 bar,
3)transferring the mixture from stage 2) to a separator which is operated at a temperature in the range from 100 to 370°C with removal of gaseous components, from 0.5 to 15% by weight of the hexamethylenediamine used in stage 1) being removed in gaseous form, and a molar deficiency of diamines of from 1 to 10 mol% being present at the outlet of stage 3), based on the other component in each case,
4)transferring the mixture from stage 3) together with hexamethylenediamine in an amount suitable to balance out the molar deficiency and to increase the amino end group content by at least 20 mmol/kg into an extruder which is operated at a temperature in the range from 150 to 400°C for a residence time in the range from 10 seconds to 30 minutes to remove gaseous components through devolatilizing orifices, such that the amino end group content is increased by at least 20 mmol/kg and the content of amino end groups in the resulting Polyamide at the end of the extruder is from 70 to 220 mmol/kg.

2. The process according to claim 1, wherein the extrusion is followed by a solid-phase postcondensation and a granulation step.

3. The process according to either of claims 1 and 2, wherein fibers, fillers, dyes, assistants or mixtures thereof are supplied directly in the extruder for compounding.

## Revendications

1. Procédé pour la production d'un polyamide à base d'acides dicarboxyliques et de diamines, comportant les étapes suivantes :
1) mise à disposition d'un mélange aqueux de monomères, qui consiste en un mélange d'acides dicarboxyliques composé de 60 à 88 % en poids d'acide téréphtalique et de 12 à 40 % en poids d'acide isophtalique, dans lequel jusqu'à 20 % en poids du mélange d'acides dicarboxyliques peuvent également être remplacés par d'autres acides dicarboxyliques, et d'hexaméthylènediamine, qui peut être remplacée à raison de jusqu'à 20 % en poids par d'autres diamines en C₂-C₃₀, des quantités équimolaires d'acides dicarboxyliques et de diamines étant présentes dans le mélange de monomères,
2) transfert du mélange aqueux provenant de l'étape 1) dans un réacteur vaporisateur fonctionnant en continu, consistant en un réacteur tubulaire vertical traversé de haut en bas, dans lequel les diamines et les acides dicarboxyliques sont mis en réaction à une température dans la plage de 100 à 370 °C et sous une pression dans la plage de 1 à 50 bars,
3) transfert du mélange provenant de l'étape 2) dans un séparateur, que l'on fait fonctionner à une température dans la plage de 100 à 370 °C, avec séparation de composants gazeux, 0,5 à 15 % en poids de l'hexaméthylènediamine utilisée dans l'étape 1) étant séparés à l'état gazeux et à la sortie de l'étape 3) étant présent un déficit molaire en diamines de 1 à 10 % en moles, par rapport à l'autre composant respectif,
4) transfert du mélange provenant de l'étape 3), conjointement avec de l'hexaméthylènediamine, en une quantité convenable pour compenser le déficit molaire et pour augmenter la teneur en groupes terminaux amino d'au moins 20 mmoles/kg, dans une extrudeuse que l'on fait fonctionner à une température dans la plage de 150 à 400 °C, pendant un temps de séjour dans la plage de 10 secondes à 30 minutes, avec élimination des composants gazeux par des orifices de dégazage, de sorte que la teneur en groupes terminaux amino s'élève d'au moins 20 mmoles/kg et à l'extrémité de l'extrudeuse à teneur en groupes terminaux amino du polyamide obtenu vaut de 70 à 220 mmoles/g.

2. Procédé selon la revendication 1, **caractérisé en ce qu'**à l'extrusion font suite une post-condensation en phase solide et une étape de granulation.

3. Procédé selon la revendication 1 ou 2, **caractérisé en ce que** pour le compoundage on introduit directement dans l'extrudeuse des fibres, des charges, des colorants, des adjuvants ou des mélanges de ceux-ci.
